# EUROPÄISCHE PATENTSCHRIFT

(11) **EP 0 834 230 B1**
(45) Veröffentlichungstag und Bekanntmachung des Hinweises auf die Patenterteilung: **13.02.2002**
(21) Anmeldenummer: 97920754.5
(22) Anmeldetag: 17.04.1997
(51) Int. Cl.: H04N 1/32, H04N 1/327

(54) **VERFAHREN UND STEUEREINRICHTUNG FÜR EINEN ABHOLDIENST VON DATEN**
PROCESS AND CONTROLLER FOR DATA FETCHING SERVICES
PROCEDE ET DISPOSITIF DE COMMANDE POUR UN SERVICE DE PRELEVEMENT DE DONNEES

(30) Priorität: 17.04.1996 DE 19615027
(43) Veröffentlichungstag der Anmeldung: 08.04.1998
(73) Patentinhaber: ALCATEL, 75008 Paris (FR)
(72) Erfinder: APFELBECK, Jürgen, D-58097 Hagen (DE)
(74) Vertreter: Zinsinger, Norbert
(86) Internationale Anmeldenummer: EP9702426
(87) Internationale Veröffentlichungsnummer: WO9739567

(56) Entgegenhaltungen:
- EP-A- 0 504 068
- EP-A- 0 616 462
- WO-A-91/03115
- US-A- 5 392 336
- NTT REVIEW, Bd. 3, Nr. 2, 1.März 1991, Seiten 26-33, XP000230750 AKIRA ISOYAMA ET AL: "PRIVATE FACSIMILE MAIL TREND"

## Beschreibung

Die vorliegende Erfindung betrifft ein Verfahren für einen Abholdienst von Daten in einem Telekommunikationsnetz gemäß dem Oberbegriff des Anspruchs 1 und eine Steuereinrichtung gemäß dem Oberbegriff des Anspruchs 13.

Aus der Patentschrift US 5,392,336 ist ein solches Verfahren und eine solche Steuereinrichtung bekannt.

In dieser Patentschrift wird ein Datenspeicher und -abholdienst beschrieben. Ein Sender sendet die zu übertragenden Daten an den Dienst. Der Dienst weist daraufhin diesen zu übertragenden Daten eine Kennummer zu und speichert die zu übertragenden Daten in einem Speicher zusammen mit der Kennummer ab. Die Kennummer wird dem Sender zurückgemeldet. Empfängt der Dienst von einem Empfänger die diesen Daten zugeordnete Kennummer, so veranlaß er, daß die Daten von dem Speicher zu diesem Empfänger übertragen werden.

Bei diesem bekannten Datenspeicher und -abholdienst bestimmen somit jeweils der Sender und der Empfänger der Daten, wann die Daten von dem Sender zu dem Speicher bzw. von dem Speicher zu dem Empfänger übertragen werden.

Weiter ist aus dem Artikel "Private Facsimile Mail Trend", NTT Review, Bd. 3, Nr. 2, 1. März 1991, Seiten 26 bis 33, XP000230750 von Akira Isoyama et al. folgendes Faxsystem bekannt.

Der Sender einer Fax-Nachricht sendet die Fax-Nachricht zusammen mit der Telefonnummer des Empfängers der Fax-Nachricht an ein Fax-System. Das Fax-System speichert die Fax-Nachricht in einem Speicher ab. Das Fax-System wählt die der Fax-Nachricht zugeordnete Telefonnummer an und übermittelt die Fax-Nachricht über die so aufgebaute Telefonverbindung an den Empfänger.

Auch bei diesem Fax-System bestimmt der Sender, wann die Daten zur Weiterübertragung an das Fax-System übertragen werden.

Aufgabe der vorliegenden Erfindung ist es, eine bessere Auslastung eines Telekommunikationsnetzes bei der Übertragung insbesondere großer Datenmengen zu gewährleisten.

Diese Aufgabe wird durch die Lehre des Anspruchs 1 oder des Anspruchs 13 gelöst.

Vorteilhafterweise kann der Betreiber des Abholdienstes bestimmen, zu welchem Zeitpunkt die Daten beim Sender abgeholt werden. Aufgrund der besseren Auslastung der Telekommunikationsnetzkapazität können billige Übertragungstarife eingerichtet werden.

Bei einer vorteilhaften Ausgestaltung der Erfindung werden die abzuholenden Daten direkt von dem Sender zu einem oder mehreren Empfängern übertragen. Der Betreiber des Abholdienstes benötigt dabei vorteilhafterweise keine Zwischenspeicher.

Weitere vorteilhafte Ausgestaltungen der Erfindung sind den abhängigen Patentansprüchen zu entnehmen.

Im folgenden wird die Erfindung zur Verdeutlichung anhand zweier Beispiele und der Zeichnungen beschrieben. Es zeigen:
- Fig. 1: ein erstes Beispiel eines Telekommunikationsnetzes mit einer erfindungsgemäßen Steuereinrichtung, in dem das erfindungsgemäße Verfahren ohne Zwischenspeicherung der Daten ausgeführt werden kann,
- Fig. 2: ein zweites Beispiel des Telekommunikationsnetzes, in dem das erfindungsgemäße Verfahren mit Zwischenspeicherung durchgeführt werden kann.

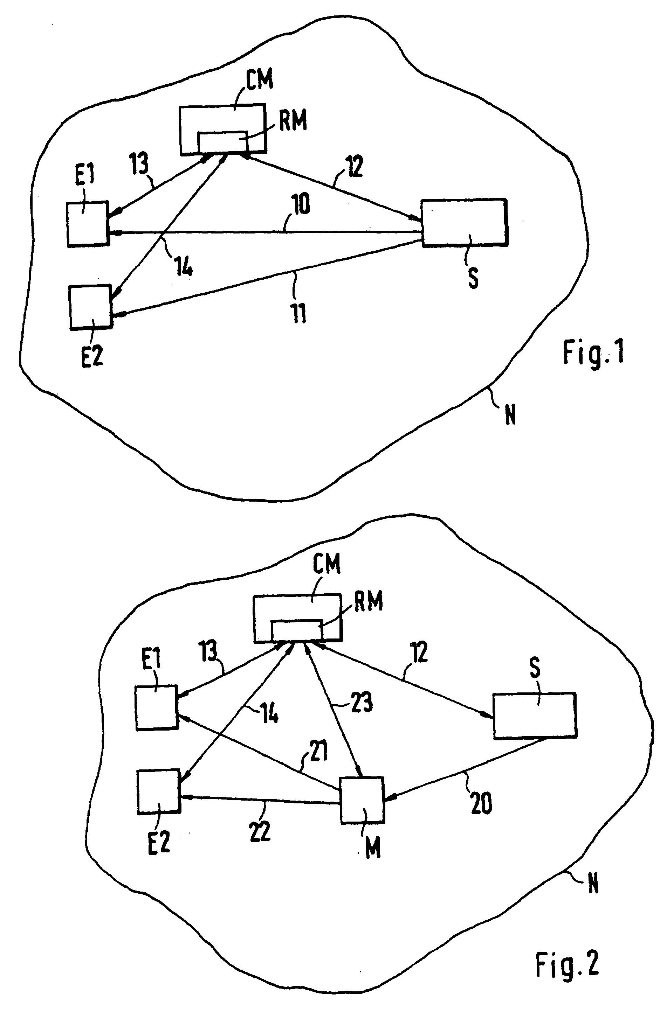

Fig. 1 zeigt ein Telekommunikationsnetz N mit einem Teilnehmer, der einen Sender S von Daten darstellt, und zwei weiteren Teilnehmern, die einen ersten Empfänger E1 und einen zweiten Empfänger E2 von Daten darstellen. In dem Telekommunikationsnetz N ist eine Steuereinrichtung CM für einen Abholdienst von Daten angeordnet. Die Steuereinrichtung CM enthält ein Empfangsmittel RM insbesondere zum Empfang von Signalisierungsnachrichten des Senders S und der Empfänger E1 und E2. Diese Signalisierungsnachrichten können über Kommunikationspfade übertragen werden. Zwischen der Steuereinrichtung CM und dem Sender S besteht ein erster Kommunikationspfad 12, zwischen der Steuereinrichtung CM und dem ersten Empfänger E1 ein zweiter Kommunikationspfad 13 und zwischen der Steuereinrichtung CM und dem zweiten Empfänger E1 ein dritter Kommunikationspfad 14. Über einen ersten Übertragungspfad 10 und einen zweiten Übertragungspfad 11 können Daten von dem Sender S zu dem ersten Empfänger E1 bzw. dem zweiten Empfänger E2 übertragen werden. Die Kommunikations- und Übertragungspfade können vermittelte Verbindung sein. Es ist aber auch möglich, daß über sie eine verbindungslose Übertragung stattfinden kann. Die Steuereinrichtung CM veranlaßt und steuert die Vorgänge zur Durchführung des Abholdienstes.

In den vorliegenden Ausführungsbeispielen stellt der Sender S Daten zur Abholung bereit. Der Sender S hat dazu einen Speicher, in dem diese Daten bis zur Abholung abgelegt werden. Der Sender S signalisiert nun der Steuereinrichtung CM über den ersten Kommunikationspfad 12 einen Auftrag zum Abholen der Daten. Das Empfangsmittel RM der Steuereinrichtung CM empfängt den vom Sender S signalisierten Auftrag. Vorteilhafterweise wird dem Sender S anschließend von der Steuereinrichtung CM der Empfang und das Akzeptieren des Auftrags signalisiert, so daß sich der Sender S darauf verlassen kann, daß der Auftrag von der Steuereinrichtung CM ausgeführt wird. Nach dem Empfang des Auftrages prüft die Steuereinrichtung CM, wann die Daten beim Sender S abgeholt werden.

Dazu stehen verschiedene Kriterien zur Verfügung, die überprüft werden können. Solche Kriterien sind beispielsweise die augenblickliche Belastung des Telekommunikationsnetzes N, die Auslastung der Steuereinrichtung CM zur Bearbeitung von Aufträgen oder andere für das Betreiben des Abholdienstes günstige Kriterien. Stellt also die Steuereinrichtung CM fest, daß wenigstens eines der Kriterien erfüllt ist, so veranlaßt und steuert sie das Abholen der Daten beim Sender S. Die Festlegung des Zeitpunktes, wann die Daten beim Sender S abgeholt werden, hängt daher nicht vom Sender S, sondern von der Steuereinrichtung CM ab. Vorteilhafterweise ist es allerdings auch möglich, daß der Sender S der Steuereinrichtung CM bei der Erteilung des Auftrages signalisiert, daß der Auftrag nicht dringlich ist. Dies ist insbesondere dann wichtig, wenn die Steuereinrichtung CM nicht ausschließlich Abholaufträge ausführt, deren Zeitpunkt von ihr selber bestimmt werden kann, sondern ebenfalls Aufträge ausführt, die sofort nach Erteilung des Auftrags erledigt werden müssen. Darüber hinaus ist es ebenfalls möglich, daß der Sender S der Steuereinrichtung CM einen Zeitrahmen vorgibt, in dem der erteilte Auftrag zur Abholung der Daten von der Steuereinrichtung CM ausgeführt werden muß. Es ist denkbar, daß die Steuereinrichtung CM solche Vorgaben durch den Sender S bei der Berechnung der Gebühren für die Ausführung des Auftrages berücksichtigt. Je freier die Steuereinrichtung CM bei der Bestimmung des Zeitpunktes der Abholung der Daten bei dem Sender S ist, um so billiger könnte eine Gebühr sein.

Im vorliegenden ersten Beispiel sollen die bei dem Sender S abzuholenden Daten zu dem ersten Empfänger E1 und dem zweiten Empfänger E2 transportiert werden. Die beiden Empfänger E1 und E2 werden daher der Steuereinrichtung CM vom Sender S signalisiert. Zu dem von der Steuereinrichtung CM bestimmten Zeitpunkt werden daher die Daten von dem Sender S über den ersten Übertragungspfad 10 zu dem ersten Empfänger E1 und über den zweiten Übertragungspfad 11 zu dem zweiten Empfänger E2 transportiert.

Die beim Sender S abzuholenden Daten werden ohne Zwischenspeichern zu den Empfängern E1 und E2 transportiert.

Die Empfänger E1 und E2 authentifizieren sich vor dem Transport der Daten gegenüber der Steuereinrichtung CM.

Jeder Empfänger E1 und E2 signalisiert vor dem Transport der Daten der Steuereinrichtung CM, daß er bereit ist, die Daten zu empfangen.

Der Sender S überprüft bei jedem Empfänger E1 und E2, ob jeder Empfänger bereit ist, die Daten zu empfangen und der Sender S signalisiert den Auftrag zu der Steuereinrichtung CM, wenn wenigstens einer der Empfänger E1 und E2 bereit ist, die Daten zu empfangen.

Fig. 2 zeigt ein weiteres Ausführungsbeispiel, in dem die Steuereinrichtung CM veranlaßt, daß die beim Sender abgeholten Daten in einem Speicher M abgespeichert werden, daß ein oder mehrere Empfänger E1 und E2 der Steuereinrichtung CM signalisieren, doß die Daten zu dem oder jedem der Empfänger zu transportieren sind und daß die Steuereinrichtung CM den Transport der Daten zu dem oder jedem Empfänger veranlaßt.

Hat die Steuereinrichtung CM den Zeitpunkt bestimmt, an dem sie die Abholung der Daten bei dem Sender S veranlaßt, so werden diese Daten über einen dritten Übertragungspfad 20 von dem Sender S zu dem Speicher M transportiert und dort abgespeichert. Über einen vierten Kommunikationspfad 23 kann die Steuereinrichtung CM dabei mit dem Speicher M kommunizieren. Über die Kommunikationspfade 13 und 14 signalisieren die Empfänger E1 bzw. E2 der Steuereinrichtung CM, daß die in dem Speicher M abgespeicherten Daten zu den Empfängern E1 und E2 zu transportieren sind. Die Steuereinrichtung CM veranlaßt daraufhin den Transport der Daten über einen vierten Übertragungspfad 21 zu dem ersten Empfänger E1 und über eine fünften Übertragungspfad 22 zu dem zweiten Empfänger E2. Der Transport der Daten von dem Speicher M zu dem ersten Empfänger E1 und dem zweiten Empfänger E2 kann dabei entweder sofort nach Anforderung der beiden Empfänger E1 und E2 erfolgen oder aber zu einem späteren Zeitpunkt, der von der Steuereinrichtung CM nach wenigstens einem der Kriterien, wie bereits oben beschrieben, bestimmt wird. Es ist auch hier möglich, daß die Steuereinrichtung CM zunächst bei den Empfängern E1 und E2 nachfragt, ob sie bereit sind, die von dem Sender S abgeholten und in dem Speicher M abgespeicherten Daten aufzunehmen.

Alle zu Fig. 1 beschriebenen Ausführungsvarianten der Erfindung, die ohne Zwischenspeicherung durchgeführt werden, könne ebenfalls auf das Beispiel gemäß Fig. 2 mit Zwischenspeicherung der Daten in dem Speicher M übertragen werden.

Es ist des weiteren ebenfalls möglich, daß der Sender S oder die Steuereinrichtung CM den abzuholenden Daten eine Kennung zuweist und die Steuereinrichtung CM nur dann den Transport der Daten zu den Empfängern E1 und E2 veranlaßt, wenn diese der Steuereinrichtung CM zuvor die den Daten zugewiesene Kennung signalisiert haben. Dadurch wird die Sicherheit vor unberechtigten Zugriffen auf die Daten erhöht. Da der Sender S nicht notwendigerweise weiß, wann die Daten bei ihm abgeholt werden, trotzdem allerdings gewährleistet werden muß, daß nur die beauftragte Steuereinrichtung CM auf die abzuholenden Daten bei dem Sender S zugreifen kann, ist es vorteilhaft, daß sich die Steuereinrichtung CM gegenüber dem Sender S vor dem Abholen der Daten authentifiziert.

Für die Durchführung oder Anwendung der Erfindung ist es nicht notwendig, daß der Sender S der Steuereinrichtung CM einen oder mehrere Empfänger der abzuholenden Daten signalisiert. Es ist auch möglich, daß die abzuholenden Daten in einem der Steuereinrichtung CM zugeordneten Speicher, beispielsweise dem Speicher M aus Fig. 2, abgespeichert werden, und in Abhängigkeit vom Vertraulichkeitsgrad der Daten nur bestimmte Empfänger öder aber beliebig viele Empfänger auf die Daten zugreifen können.

## Patentansprüche

1. Verfahren für einen Abholdienst von Daten in einem Telekommunikationsnetz (N), das einen Sender (S) von Daten und eine Steuereinrichtung (CM) zur Steuerung des Abholdienstes aufweist, wobei bei dem Verfahren von dem Sender (S) Daten zum Abholen bereitgestellt werden,
**dadurch gekennzeichnet, daß** der Sender (S) der Steuereinrichtung (CM) zur Steuerung des Abholdienstes über einen Kommunikationspfad (12) des Telekommunikationsnetzes (N) einen Auftrag zum Abholen der bereitgestellten Daten signalisiert und die Steuereinrichtung (CM) den von dem Sender (S) signalisierten Auftrag zum Abholen von Daten empfängt, daß die Steuereinrichtung (CM) nach Empfang des Auftrages zum Abholen von Daten nach wenigstens einem Kriterium den Zeitpunkt bestimmt, zu dem die Daten nach dem Empfangen des Auftrags beim Sender (S) abgeholt werden, und daß die Steuereinrichtung (CM) das Abholen der von dem Sender (S) bereitgestellten Daten zu diesem von ihr bestimmten Zeitpunkt veranlaßt.

2. Verfahren nach Anspruch 1,
**dadurch gekennzeichnet, daß** die Steuereinrichtung (CM) dem Sender (S) nach dem Empfangen des Auftrags das Akzeptieren des Auftrags signalisiert.

3. Verfahren nach Anspruch 1 oder 2,
**dadurch gekennzeichnet, daß** der Sender (S) der Steuereinrichtung (CM) eine Nichtdringlichkeit des Auftrags signalisiert.

4. Verfahren nach einem der vorhergehenden Ansprüche,
**dadurch gekennzeichnet, daß** der Sender (S) der Steuereinrichtung (CM) einen Zeitrahmen vorgibt, in dem der Auftrag ausgeführt werden muß.

5. Verfahren nach einem der vorhergehenden Ansprüche,
**dadurch gekennzeichnet, daß** das Telekommunikationsnetz (N) einen oder mehrere Empfänger (E1, E2) aufweist und der Sender (S) der Steuereinrichtung (CM) einen oder mehrere Empfänger (E1, E2) signlisiert, zu denen die abzuholenden Daten zu transportieren sind.

6. Verfahren nach Anspruch 5,
**dadurch gekennzeichnet, daß** die beim Sender (S) abzuholenden Daten ohne Zwischenspeicherung zu dem oder jedem Empfänger (E1, E2) transportiert werden.

7. Verfahren nach Anspruch 5 oder 6,
**dadurch gekennzeichnet, daß** der oder jeder Empfänger (E1, E2) sich vor dem Transport der Daten gegenüber der Steuereinrichtung (CM) authentifiziert.

8. Verfahren nach einem der Ansprüche 5 bis 7,
**dadurch gekennzeichnet, daß** der oder jeder Empfänger (E1, E2) vor dem Transport der Daten der Steuereinrichtung (CM) signalisiert, daß er bereit ist, die Daten zu empfangen.

9. Verfahren nach einem der Ansprüche 5 bis 7,
**dadurch gekennzeichnet, daß** der Sender (S) bei dem oder jedem Empfänger (E1, E2) überprüft, ob der oder jeder Empfänger (E1, E2) bereit ist, die Daten zu empfangen und daß der Sender (S) den Auftrag zu der Steuereinrichtung (CM) signalisiert, wenn wenigstens einer der Empfänger (E1, E2) bereit ist, die Daten zu empfangen.

10. Verfahren nach einem der Ansprüche 1 bis 4,
**dadurch gekennzeichnet, daß** die Steuereinrichtung (CM) veranlaßt,
daß die beim Sender abgeholten Daten in einem Speicher (M) abgespeichert werden,
daß ein oder mehrere Empfänger (E1, E2) der Steuereinrichtung (CM) signalisieren, daß die Daten zu dem oder jedem Empfänger (E1, E2) zu transportieren sind und
daß die Steuereinrichtung (CM) den Transport der Daten zu dem oder jedem Empfänger (E1, E2) veranlaßt.

11. Verfahren nach Anspruch 10.
**dadurch gekennzeichnet, daß** der Sender (S) den abzuholenden Daten eine Kennung zuweist und
daß die Steuereinrichung (CM) den Transport der Daten zu dem oder jedem Empfänger (E1, E2) veranlaßt, wenn der oder jeder Empfänger (E1, E2) der Steuereinrichtung (CM) die den Daten zugewiesene Kennung signalisiert.

12. Verfahren nach einem der vorhergehenden Ansprüche,
**dadurch gekennzeichnet, daß** sich die Steuereinrichtung (CM) gegenüber dem Sender (S) vor dem Abholen der Daten authentifiziert.

13. Steuereinrichtung (CM) zur Steuerung eines Abholdienstes von Daten in einem Telekommunikationsnetz (N) mit einem Empfangsmittel (RM) zum Empfang von Signalisierungsnachrichten von Sendern (S) des Telekommunikationsnetzes (N) über Kommunikationspfade (12) des Telekommunikationsnetzes (N),
**dadurch gekennzeichnet, daß** die Steuereinrichtung (CM) so ausgestaltet ist, daß sie, nachdem sie einen von einem Sender (S) des Telekommunikationsnetzes (N) über einen Kommunikationspfad (12) des Telekommunikationsnetzes (N) signalisierten Auftrag zum Abholen von Daten empfangen hat, nach wenigstens einem Kriterium den Zeitpunkt bestimmt, zu dem die Daten nach dem Empfangen des Auftrags bei dem Sender (S) abgeholt werden, und daß die Steuereinrichtung (CM) weiter so ausgestaltet ist, daß sie das Abholen der von dem Sender bereitgestellten Daten zu diesem von ihr bestimmten Zeitpunkt veranlaßt.

## Claims

1. Process for a data fetching service in a telecommunication network (N), which has a sender (S) of data and a control facility (CM) for controlling the fetching service, wherein in the process the sender (S) prepares data for fetching,
**characterised in that** the sender (S) signals a request for fetching the prepared data to the control facility (CM) for controlling the fetching service via a communication path (12) of the telecommunication network (N), and the control facility (CM) receives the signalled request for data fetching, that after receipt of the request for data fetching, the control facility (CM) determines in accordance with at least one criterion the time at which the data are fetched from the sender (S), and that the control facility (CM) arranges the fetching of the data prepared by the sender (S) at the time determined by said control facility (CM).

2. Process according to Claim 1,
**characterised in that** after receiving the request the control facility (CM) signals the acceptance of the request to the sender (S).

3. Process according to Claim 1 or 2,
**characterised in that** the sender (S) signals a lack of urgency of the request to the control facility (CM).

4. Process according to one of the preceding Claims,
**characterised in that** the sender (S) stipulates to the control facility (CM) a time frame in which the request must be carried out.

5. Process according to one of the preceding Claims,
**characterised in that** the telecommunication network (N) contains one or more recipients (E1, E2) and the sender (S) signals to the control facility (CM) one or more recipients (E1, E2) to which the data to be fetched are to be transported.

6. Process according to Claim 5,
**characterised in that** the data to be fetched from the sender (S) are transported to the one recipient or every recipient (E1, E2).

7. Process according to Claim 5 or 6,
**characterised in that** before the transportation of the data, the one recipient or every recipient (E1, E2) authenticates itself to the control facility (CM).

8. Process according to one of Claims 5 to 7,
**characterised in that** before the transportation of the data, the one recipient or every recipient (E1, E2) signals the control facility (CM) that it is ready to receive the data.

9. Process according to one of Claims 5 to 7,
**characterised in that** the sender (S) checks with the one recipient or every recipient (E1, E2) whether the one recipient or every recipient (E1, E2) is ready to receive the data, and that the sender (S) signals the request to the control facility (CM) when at least one of the recipients (E1, E2) is ready to receive the data.

10. Process according to one of Claims 1 to 4,
**characterised in that** the control facility (CM) arranges for the data fetched from the sender to be stored in a memory (M),
that one or more recipients (E1, E2) signal the control facility (CM) that the data are to be transported to the one recipient or to every recipient (E1, E2) and
that the control facility (CM) arranges the transportation of the data to the one recipient or every recipient (E1, E2).

11. Process according to Claim 10,
**characterised in that** the sender (S) assigns an identification to the data to be fetched and that the control facility (CM) arranges the transportation of the data to the one recipient or every recipient (E1, E2) when the one recipient or every recipient (E1, E2) signals to the control facility (CM) the identification assigned to the data.

12. Process according to one of the preceding Claims,
**characterised in that** before the data are fetched, the control facility (CM) authenticates itself to the sender (S).

13. Control facility (CM) for controlling a data fetching service in a telecommunication network (N), with a receiving means (RM) for receiving signalling messages from senders (S) of the telecommunication network (N) via communication paths (12) of the telecommunication network (N),
**characterised in that** the control facility (CM) is designed so that after it has received the request for data fetching signalled by a sender (S) of the telecommunication network (N) via a communication path (12) of the telecommunication network (N), it determines according to at least one criterion the time at which the data are fetched from the sender (S) after receipt of the request, and that the control facility (CM) is further designed so that it arranges the fetching of the data prepared by the sender, at the time,specified by said control facility.

## Revendications

1. Procédé destiné à l'exploitation d'un service de prélèvement de données dans un réseau de télécommunications (N), qui comprend un émetteur (S) de données et un dispositif de commande (CM) pour la commande du service de prélèvement, l'émetteur (S) mettant à disposition, dans le cadre du procédé, des données à prélever,
**caractérisé en ce que** l'émetteur (S) signale au dispositif de commande (CM) pour la commande du service de prélèvement, par l'intermédiaire d'une ligne ou voie de communication (12) du réseau de télécommunications (N), un ordre de prélèvement des données mises à disposition, et le dispositif de commande (CM) réceptionne l'ordre de prélèvement de données signalé par l'émetteur (S), **en ce que** le dispositif de commande (CM), après réception de l'ordre de prélèvement de données, détermine, au moins selon un critère, l'instant ou le moment auquel les données seront prélevées chez l'émetteur (S) après la réception de l'ordre, et **en ce que** le dispositif de commande (CM) produit, à cet instant qu'il a déterminé, le prélèvement des données mises à disposition par l'émetteur (S).

2. Procédé selon la revendication 1, **caractérisé en ce que** le dispositif de commande (CM) signale à l'émetteur (S), après réception de l'ordre, l'acceptation de cet ordre.

3. Procédé selon la revendication 1 ou 2, **caractérisé en ce que** l'émetteur (S) signale au dispositif de commande (CM), un degré de non urgence de l'ordre.

4. Procédé selon l'une des revendications précédentes, **caractérisé en ce que** l'émetteur (S) prescrit au dispositif de commande (CM), une plage de temps au cours de laquelle l'ordre doit être exécuté.

5. Procédé selon l'une des revendications précédentes, **caractérisé en ce que** le réseau de télécommunications (N) comprend un ou plusieurs récepteurs (E1, E2), et l'émetteur (S) signale au dispositif de commande (CM) un ou plusieurs récepteurs (E1, E2) vers lesquels doivent être transférées les données à prélever.

6. Procédé selon la revendication 5, **caractérisé en ce que** les données à prélever chez l'émetteur (S) sont transférées sans stockage intermédiaire, vers le récepteur ou chaque récepteur (E1, E2).

7. Procédé selon la revendication 5 ou 6, **caractérisé en ce que** le récepteur ou chaque récepteur (E1, E2) s'authentifie auprès du dispositif de commande (CM) avant le transfert des données.

8. Procédé selon l'une des revendications 5 à 7, **caractérisé en ce que** le récepteur ou chaque récepteur (E1, E2) signale au dispositif de commandé (CM), avant le transfert des données, qu'il est prêt pour la réception les données.

9. Procédé selon l'une des revendications 5 à 7, **caractérisé en ce que** l'émetteur (S) vérifie auprès du récepteur ou de chaque récepteur (E1, E2), si le récepteur ou chaque récepteur (E1, E2) est prêt pour la réception des données, et **en ce que** l'émetteur (S) signale l'ordre au dispositif de commande (CM) lorsque l'un au moins des récepteurs (E1, E2) est prêt pour la réception des données.

10. Procédé selon l'une des revendications 1 à 4, **caractérisé en ce que** le dispositif de commande (CM) produit le stockage dans une mémoire (M), des données prélevées chez l'émetteur, **en ce qu'**un ou plusieurs récepteurs (E1, E2) signalent au dispositif de commande (CM) que les données sont à transférer au récepteur ou à chaque récepteur (E1, E2), et **en ce que** le dispositif de commande (CM) produit le transfert des données vers le récepteur ou chaque récepteur (E1, E2).

11. Procédé selon la revendication 10, **caractérisé en ce que** l'émetteur (S) affecte une caractéristique d'identification aux données à prélever, et **en ce que** le dispositif de commande (CM) produit le transfert des données vers le récepteur ou chaque récepteur (E1, E2) lorsque le récepteur ou chaque récepteur (E1, E2) signale au dispositif de commande (CM), la caractéristique d'identification affectée aux données.

12. Procédé selon l'une des revendications précédentes, **caractérisé en ce que** le dispositif de commande (CM) s'authentifie auprès de l'émetteur(S), avant le prélèvement des données.

13. Dispositif de commande (CM) pour la commande d'exploitation d'un service de prélèvement de données dans un réseau de télécommunications (N), comprenant un moyen de réception (RM) destiné à la réception d'informations de signalisation en provenance d'émetteurs (S) du réseau de télécommunications (N), par l'intermédiaire de voies ou lignes de télécommunications (12) du réseau de télécommunications (N), **caractérisé en ce que** le dispositif de commande (CM) est conçu de façon telle, qu'après la réception d'un ordre de prélèvement de données signalé par un émetteur (S) du réseau de télécommunications (N) par l'intermédiaire d'une voie ou ligne de télécommunications (12), il détermine, au moins selon un critère, le moment ou l'instant auquel les données seront prélevées chez l'émetteur (S) après la réception de l'ordre, et **en ce que** le dispositif de commande (CM) est par ailleurs conçu de façon à ce qu'il produise, à cet instant qu'il a déterminé, le prélèvement des données mises à disposition par l'émetteur (S).
